# EUROPÄISCHE PATENTSCHRIFT

(11) **EP 0 790 421 B1**
(45) Veröffentlichungstag und Bekanntmachung des Hinweises auf die Patenterteilung: **15.09.1999**
(21) Anmeldenummer: 97101322.2
(22) Anmeldetag: 29.01.1997
(51) Int. Cl.: F16C 29/06

(54) **Linearführung**
Linear Guide
Guide linéaire

(30) Priorität: 14.02.1996 DE 19605388
(43) Veröffentlichungstag der Anmeldung: 20.08.1997
(73) Patentinhaber: Neff Antriebstechnik Automation GmbH, D-71111 Waldenbuch (DE)
(72) Erfinder: Barth, Waldemar, 71093 Weil-Breitenstein (DE); Christmann, Martin, 72770 Reutlingen (DE); Schön, Uwe, 71101 Schönaich (DE); Kec, Andreas, 72135 Dettenhausen (DE)
(74) Vertreter: Patentanwälte Rüger, Barthelt & Abel

(56) Entgegenhaltungen:
- EP-A- 0 268 011
- EP-A- 0 483 384
- CH-A- 466 645
- DE-A- 4 005 582
- US-A- 3 071 418
- US-A- 4 921 361
- US-A- 5 217 308
- US-A- 5 344 237

## Beschreibung

Die Erfindung betrifft eine Linearführung mit den Merkmalen des Oberbegriffes des Patentanspruches 1.

Eine derartige Linearführung ist aus der US-A-3 071 418 bekannt.

Derartige Linearführungen werden zur beweglichen Lagerung von Maschinenelementen entlang einer Achse (Bewegungsrichtung) verwendet. Sie weisen dazu einen Schlitten auf, der möglichst reibungs- und geräuscharm an einer Führungsschiene gelagert sein soll. Die Linearführungen werden als Linearlager, wenn sie mit Antriebseinrichtungen versehen sind, als Linearantriebe und für vergleichbare Zwecke verwendet. Linearführungen sind dabei häufig starker Verschmutzung unterworfen. Auch hier kommt es auf einen zuverlässigen, möglichst wartungsarmen Betrieb an.

Aus der DE 40 05 582 A1 ist ein Linearlager mit einer im Querschnitt im wesentlichen rechteckigen Führungsschiene bekannt, an der ein Linearschlitten längsverschiebbar geführt ist. Der Linearschlitten besteht, wie die Führungsschiene, aus Stahl und ist an dieser über zwei Kugelreihen abgestützt. Die Führungsschiene weist eine längs verlaufende, grabenartige Vertiefung (Längsausnehmung) auf, in die sich ein entsprechender Vorsprung des Linearschlittens erstreckt. Die beiden böschungsartig ausgebildeten, aufeinander zu weisenden seitlichen Flanken der Vertiefung der Führungsschiene sind jeweils mit einer längs verlaufenden Führungsrille für Kugeln zur Lagerung des Schlittens versehen. Der Schlitten weist an seinen den Flanken der Führungsschiene jeweils gegenüber liegenden Seitenflächen des Vorsprunges ebenfalls jeweils eine Führungsrille auf. Zur Rückführung der bei Fortbewegung des Schlittens rückseitig freiwerdenden Kugeln und zum Einführen von Kugeln zwischen Schlitten und Führungsschiene an der in Fahrtrichtung jeweils vorn liegenden Seite des Schlittens sind zwei Kugelrückführungskanäle vorgesehen. Diese sind durch ein bspw. an den Schlitten angespritztes Kunststoffteil gebildet, das sich über die flache Rückseite des Schlittens sowie über seine beiden Stirnseiten erstreckt.

Die Kugelrückführungskanäle beider so gebildeter Kugelumläufe sind in dem Kunststoffkörper nebeneinander angeordnet. In den stirnseitigen Abschnitten des Kunststoffelementes sind die Kugelrückführungskanäle etwa C-förmig gekrümmt, wobei beide benachbarte Rückführungs-kanalabschnitte bei Bewegung des Schlittens in gleicher Richtung, das heißt gleichsinnig, durchlaufen werden. Die rückseitig an dem Schlitten entlanggeführten Abschnitte der Kugelrückführungskanäle sind gerade ausgebildet und parallel zueinander angeordnet.

Aus der Umgebung in die Längsausnehmung gelangender Schmutz kann die Reibung und den Verschleiß erhöhen.

Bei einer Bewegung des Schlittens laufen die Kugeln mit halber Schlittengeschwindigkeit auf ihrem Kugelumlaufweg um. In den gekrümmten Abschnitten des Kugelrück-führungskanales werden die Kugeln beschleunigt, um den Schlitten gewissermaßen zu überholen. Die Beschleunigungsbereiche, das heißt die gekrümmten Abschnitte der Kugelrückführungskanäle, haben bei höheren Verfahrgeschwindigkeiten Einfluß auf die Laufruhe.

Außerdem ist die Herstellung des Schlittens mit dem zur Kugelumlenkung vorgesehenen Kunststoffteil relativ kompliziert. Bei der Herstellung müssen der Schlitten und die Führungsschiene insgesamt mit geringen Toleranzen hergestellt werden, um ein gutes Laufverhalten zu erreichen. Dies gilt insbesondere für den an dem Schlitten auszubildenden Kunststoffkörper, zu dessen Herstellung zunächst Formkerne entsprechend der Gestalt der Kugelumleitkanäle an dem Schlitten angeordnet werden. Nach Umspritzen mit einem aushärtenden Kunststoff werden die Formkerne durch thermische oder chemische Behandlung entfernt.

Davon ausgehend ist es eine Aufgabe der Erfindung, eine Linearführung zu schaffen, die wenig verschmutzungs-anfällig ist. Darüber hinaus soll die Linearführung ein verbessertes Laufverhalten insbesondere bei höheren Verfahrgeschwindigkeiten aufweisen und sich auf einfache und für die Serienfertigung geeignete Weise herstellen lassen.

Diese Aufgabe wird durch die Linearführung mit den Merkmalen des Patentanspruches 1 gelöst.

Durch die Anordnung der Führungslager in dem von der Führungsschiene definierten Innenraum sind die Führungslager des Schlittens vor Verschmutzung weitgehend geschützt. Die Laufflächen der Führungslager werden deshalb auf Dauer sauber gehalten. Das erhöht die Lebensdauer und Wartungsintervalle, senkt Wartungskosten und verbessert die Laufruhe der Führungslager.

Ein Führungsmittel legt die Umlaufwege der Wälzkörper an dem Schlitten fest. Das Führungsmittel können dabei in dem Schlitten, der ein- oder mehrstückig ausgebildet sein kann, angeordnete Umlenkkanäle sein. Diese können auch teilweise durch gesonderte Kunststoffelemente definiert sein. Jedenfalls aber sind die beiden Umlaufwege so festgelegt, daß sie sich insbesondere in den Umlenkbereichen, das heißt in gekrümmt verlaufenden Abschnitten des Umlaufweges, räumlich überkreuzen. Dies ermöglicht es, den Abstand zwischen dem Bahnabschnitt, in dem die Wälzkörper tragen und Lagerfunktion haben, und dem Rückführungsabschnitt des Umlaufweges zu maximieren, wodurch die Krümmung des Umlaufweges so klein wie möglich gehalten wird. Weil sich die Umlaufwege insbesondere in den Stirnbereichen des Schlittens überkreuzen, liegt der Rückführungsabschnitt eines Umlaufweges jeweils bei dem Tragabschnitt des anderen Umlaufweges. Auch bei engen Platzverhältnissen und kleinen Schlittenbauformen können auf diese Weise die Rückführungswege platzsparend so untergebracht werden, daß sich aufgrund der geringen Bahnkrümmungen ein ruhiges Laufverhalten der Kugeln und somit des Schlittens einstellt.

Wegen der so erreichten guten Platzausnutzung und geringen Krümmung der Rückführungskanäle ist es möglich, relativ große Wälzkörper- und Kanaldurchmesser vorzusehen, ohne das Laufverhalten des Schlittens zu beeinträchtigen. Große Wälzkörper (Kugeln) ermöglichen eine hohe Tragfähigkeit, so daß es möglich wird, besonders kleine Schlitten mit besonders großer Tragfähigkeit zu schaffen.

Der Krümmungsradius der Umlaufwege liegt vorzugsweise etwa bei dem halben Abstand der Führungsbahnen voneinander, wenigstens aber ist er größer als ein Viertel dieses Abstandes. Damit wird eine ausreichende Laufruhe der Wälzkörper und des Schlittens erzielt.

Die Führung der Umlenkabschnitte der Rückführungskanäle überkreuz ermöglicht es außerdem, alle geradlinigen Abschnitte der Umlaufwege in einer einzigen Ebene anzuordnen. Dies ermöglicht es wiederum, die Rückführungskanäle als Längsbohrungen durch den Schlitten auszubilden. Dieser kann dadurch besonders flach ausgebildet werden. Das Umlenken der Wälzkörper oder Kugeln erfolgt dann in gesonderten, stirnseitig auf den Schlitten aufgesetzten Kunststoffkörpern, die jeweils zwei etwa U-förmige, einander überkreuzende Kanäle enthalten. Während der Schlitten von besonders einfacher Gestalt und somit einfach herstellbar ist, können die Umlenkkörper (Kunststoffkörper) in speziellen Fertigungsstufen gesondert hergestellt werden. Sie werden über geeignete Mittel lagerichtig mit dem Schlitten verbunden und an diesem befestigt. Dazu können Rastmittel oder anderweitige formschlüssige Mittel dienen.

Die geringe Größe des Schlittens bei der ihm eigenen hohen Laufruhe und Tragfähigkeit gestatten es, diesen in dem Innenraum einer Führungsschiene anzuordnen.

Die Führungsschiene ist etwa rohrförmig ausgebildet und weist einen Längsschlitz zur Verbindung des innen gelagerten Schlittens mit weiteren äußeren Maschinenelementen auf. Die Führungsschiene ist vorzugsweise ein Aluminium-Strangpreßprofil, von dem je nach Verwendungszweck entsprechende Längen abgelängt werden.

Zusätzlich kann der Längsschlitz mit einem Abdeckband versehen sein, das an der durch den Führungskörper gebildeten Führungsschiene lösbar gehalten ist. Im Bereich eines den Längsschlitz durchragenden und mit dem Schlitten verbundenen Kraftausleitungselementes gibt es den Längsschlitz frei, während es diesen ansonsten abdeckt.

Die Führungsbahnen werden vorzugsweise durch Stahlschienen gebildet, die in das Strangpreßprofil einschiebbar und formschlüssig darin gehalten sind. Dies ermöglicht eine besonders kostengünstige Fertigung, wobei die Führungsschiene infolge ihrer nach außen geschlossenen Bauform einen guten Schutz des Schlittens gegen Verschmutzung und Beschädigung sicherstellt. Dies erhöht die Zuverlässigkeit der Linearführung.

Drei Führungslager sind zur drehfesten Lagerung des Schlittens an bzw. in der Führungsschiene ausreichend. Vorzugsweise werden jedoch vier Führungslager verwendet, die im Querschnitt gesehen an den Ecken eines Rechteckes oder Trapezes angeordnet sind.

Eine über Getriebemittel mit dem Schlitten verbundene Antriebseinrichtung ermöglicht die Verwendung der so erhaltenen Einheit als Linearantrieb und/oder zur Line-arpositionierung. Dabei sind die Lagerelemente vorzugsweise beidseits zu einem zentral durch den Innenraum der Führungsschiene verlaufenden Getriebemittel angeordnet. Es ergibt sich eine gute Abstützung des Schlittens durch die außen liegenden Führungslager.

Es können vorzugsweise zwei Führungslager in einem Lagerelement zusammengefaßt werden. Das ermöglicht eine besonders raumsparende Auslegung der Führungslager.

Eine Ausführungsform der Erfindung ist in der Zeichnung dargestellt. Es zeigen:
- Fig. 1: eine Linearführung in schematischer Perspektivdarstellung,
- Fig. 2: die Linearführung nach Fig. 1 in einer perspektivischen, aufgeschnittenen Darstellung, in einem anderen Maßstab,
- Fig. 3: einen zu der Linearführung nach den Fig. 1 und 2 gehörigen Schlitten, in perspektivischer Darstellung und in einem anderen Maßstab,
- Fig. 4A: einen endseitig auf den Schlitten nach Fig. 3
- Fig. 4B: aufzusetzenden Führungskörper mit zwei schematisch angedeuteten Kugelumleitkanälen, in schematisierter und perspektivischer Darstellung, und
- Fig. 5: die Linearführung nach Fig. 1 in Querschnitts-darstellung und in einem anderen Maßstab.

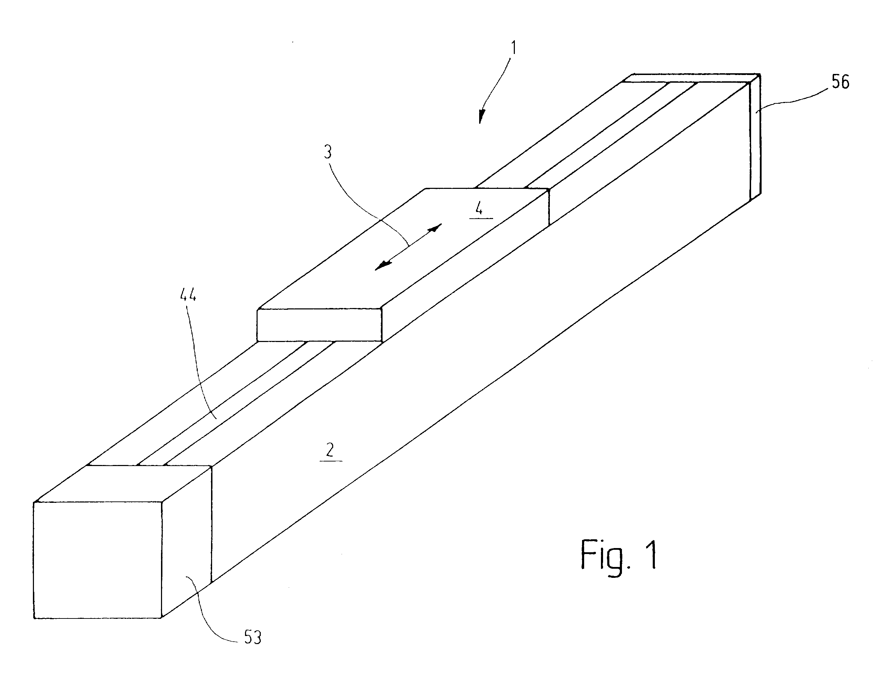

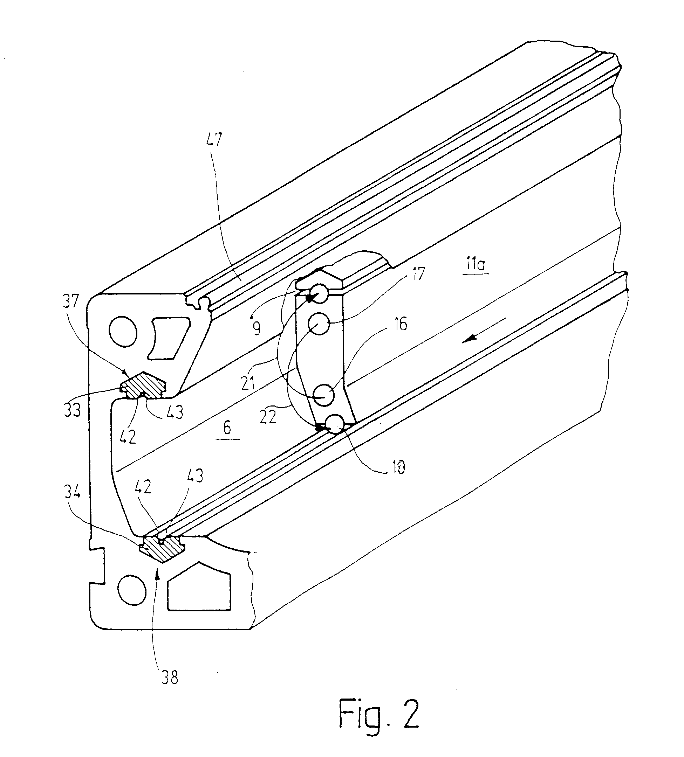

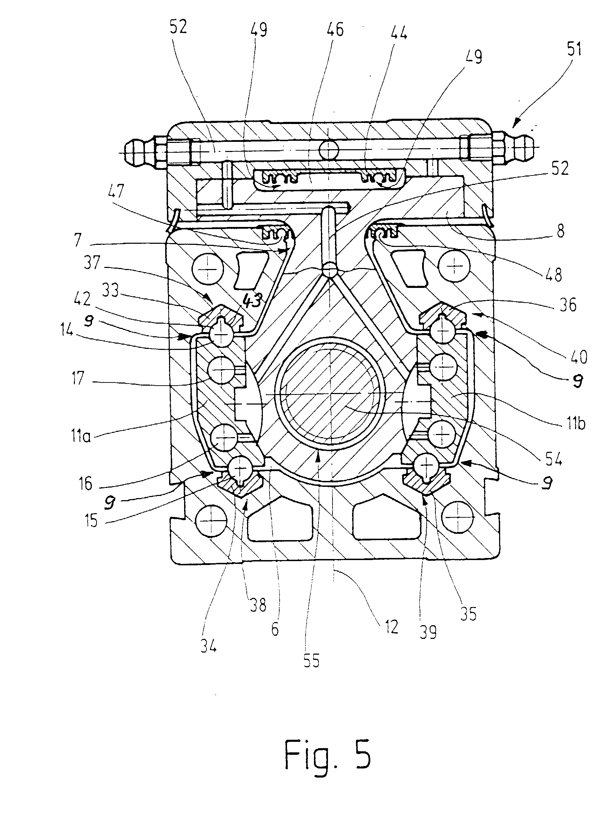

In Fig. 1 ist eine Linearführung 1 dargestellt, die einen an einer Führungsschiene 2 entlang einer Achse 3 in Längsrichtung verschiebbar gelagerten Schlitten 4 aufweist, dessen Längsausdehnung erheblich geringer ist als die Längsausdehnung der Führungsschiene 2. Die Führungsschiene 2 ist, wie aus den Fig. 2 und 5 hervorgeht, als Aluminium-Strangpreßprofil ausgebildet und weist einen längs verlaufenden Innenraum 6 auf. Aus dem Innenraum 6 der im Querschnitt etwa quadratischen Führungsschiene 2 führt ein Längsschlitz 7 nach außen, der in Richtung der Achse 3 mittig an der in Fig. 1 oberen Seite der Führungsschiene 2 angeordnet ist.

Der Längsschlitz 7 ist von einem Kraftübertragungselement 8 durchgriffen, das an seinem außenliegenden Ende mit einer Platte verbunden ist und den Schlitten 4 bildet, wie aus Fig. 5 hervorgeht. An seinem innenliegenden, d.h. in dem Innenraum 6 befindlichen Ende, ist das Kraftübertragungselement 8 durch vier Führungslager 9 an der Führungsschiene 2 gelagert. Die Führungslager 9 sind durch Lagerelemente 11a, 11b gebildet, die über Kugeln 10 an entsprechenden Laufflächen abgestützt sind. Die Lagerelemente 11a, 11b sind dabei symmetrisch zu einer den Längsschlitz 7 sowie die Führungsschiene 2 symmetrisch schneidenden Ebene 12 angeordnet und mit beiden Flanken des Kraftübertragungselementes 8 verbunden. (Im Folgenden trifft eine Bezugnahme auf "das Lagerelement 11" auf beide Lagerelemente 11a, 11b gleichermaßen zu.) Gleiches gilt für weitere, durch Buchstabenindex unterschiedene Teile.

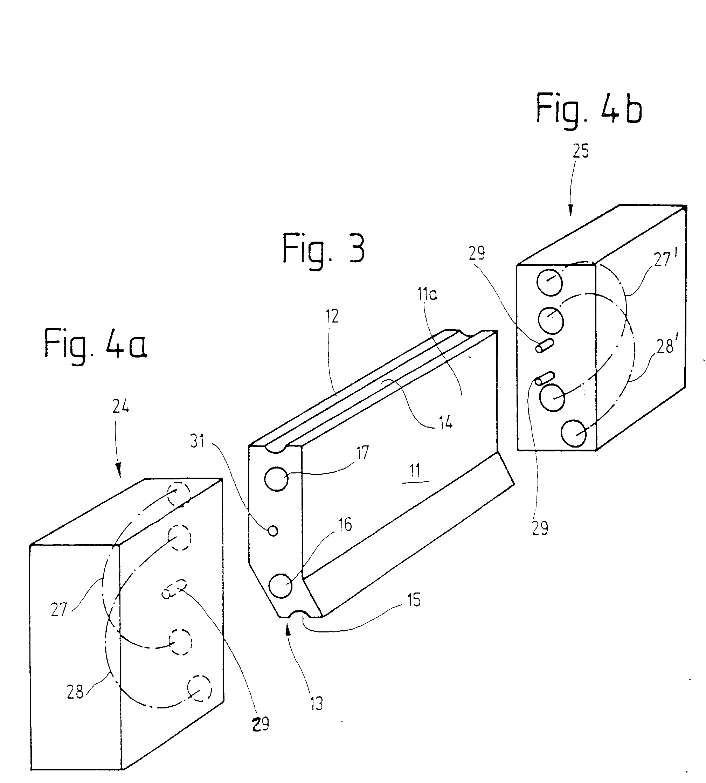

Das insbesondere in Fig. 3 dargestellte Lagerelement 11a (11) weist einen im wesentlichen plattenförmigen Körper auf, der bedarfsweise und wie in den Fig. dargestellt, um eine in Längsrichtung liegende Achse mehr oder weniger stark gebogen oder abgewinkelt sein kann. An seinen voneinander weg weisenden Flanken 12, 13 ist das Lagerelement 11 mit im Querschnitt kreisabschnittförmigen Laufbahnen 14, 15 versehen, die sich parallel zueinander in Längsrichtung erstrecken.

Ebenfalls in Längsrichtung erstrecken sich zwei Kugelrückführungskanäle 16, 17 durch das Lagerelement 11, die als gerade Durchgangsbohrungen ausgebildet sind. Der Kugelrückführungskanal 16 ist dabei der Laufbahn 14 zugeordnet und der Kugelrückführungskanal 17 ist der Laufbahn 15 zugeordnet. Damit ist der Kugelrückführungskanal 16 für die Laufbahn 14 der Laufbahn 15 benachbart angeordnet und der Kugelrückführungskanal 17 für die Laufbahn 15 liegt in unmittelbarer Nachbarschaft zu der ihm nicht zugeordneten Laufbahn 14.

Wie insbesondere auch aus Fig. 5 hervorgeht, sind die Kugelrückführungskanäle 16, 17 und die Laufbahnen 14, 15 ungefähr in einer einzigen Ebene angeordnet. Dies bedeutet, daß sich eine Ebene finden läßt, die sowohl die Laufbahnen 14, 15 als auch die Kugelrückführungskanäle 16, 17 in Längsrichtung schneidet.

Alternativ ist es möglich, die Laufbahnen 14, 15 und die Kugelrückführungskanäle 16, 17 unter Beibehaltung der obigen Nachbarschaftsbeziehung in unterschiedlichen Ebenen anzuordnen.

Das Lagerelement 11 ist, wie Fig. 2 und 5 zeigen, mittels Kugeln 10 verschiebbar gelagert, die gruppenweise auf zwei separaten Umlaufwegen 21, 22 geführt sind (Fig. 2). Der Umlaufweg 21 enthält den Kugelrückführungskanal 16 und die Laufbahn 14. Der Umlaufweg 22 enthält den Kugelrückführungskanal 17 und die Laufbahn 15.

Die Zuordnung zwischen der jeweiligen Laufbahn 14, 15 und dem zugehörigen Kugelrückführungskanal 16, 17 wird an beiden Stirnseiten des Lagerelementes 11 durch Umlenkelemente 24, 25 bewirkt, die in den Fig. 4A, 4B dargestellt sind. Das Umlenkelement 24 ist bezüglich einer quer zu der Längsrichtung orientierten Ebene spiegelbildlich zu dem Umlenkelement 25 ausgebildet, so daß im folgenden lediglich das Umlenkelement 24 beschrieben ist und sich die Beschreibung entsprechend auf das Umlenkelement 25 bezieht.

Das Umlenkelement 24 ist ein zweiteiliger Kunststoffkörper, der zwei Umlenkkanäle 27, 28 enthält. Der Umlenkkanal 27 ist in Fig. 4A strichpunktiert angedeutet und verbindet die Laufbahn 14 mit dem Kugelrückführungskanal 16. Der Umlenkkanal 27 ist im Querschnitt kreisförmig und aufgrund des relativ großen Abstandes zwischen der Laufbahn 14 und dem Kugelrückführungskanal 16 so gekrümmt, daß der Krümmungsradius relativ groß ist. Jedenfalls ist er größer als ein Viertel des Abstandes der Laufbahnen 14, 15 voneinander.

Der Umlenkkanal 28 verbindet die Laufbahn 15 mit dem Kugelrückführungskanal 17 und führt dabei an dem Umlenkkanal 27 vorbei. Die Umlenkkanäle 27, 28 kreuzen sich somit, ohne sich zu schneiden.

Das Umlenkelement 25 weist entsprechend ausgebildete Umlenkkanäle 27', 28' auf, die sich ebenfalls räumlich überkreuzen. Dies bedeutet, daß der etwa U-förmig ausgebildete Kanal 27 (27') sich mit einem Schenkel zwischen die beiden Schenkel des Umlenkkanales 28 (29') erstreckt und umgekehrt.

Die Umlenkelemente 24, 25 sind durch in den Fig. 3, 4A und 4B lediglich schematisch angedeutete Verbindungsmittel, wie bspw. Rastzapfen 29, mit dem Lagerelement 11 verbunden. Den Rastzapfen 29 sind entsprechende, in dem Lagerelement 11 vorgesehene Rastöffnungen 31 zugeordnet.

Wie insbesondere aus den Fig. 2 und 5 hervorgeht, sind als Laufbahnen für die zur Abstützung des Lagerelementes 11 und des Schlittens 4 dienenden Kugeln 10 in der Führungsschiene 2 Stahlschienen 33, 34, 35, 36 angeordnet, die sich in Längsrichtung 3 erstrecken. Die Stahlschienen 33, 34, 35, 36 sind an den Ecken eines Trapezes angeordnet. Die Stahlschienen 33, 34, 35, 36 sind in entsprechende, hinterschnittene Nuten 37, 38, 39, 40 der Führungsschiene 2 in Längsrichtung eingeschoben. Die Nuten 37 bis 40 halten die Stahlschienen 33, 34, 35, 36 dadurch formschlüssig. Um einen guten Sitz der Stahlschienen 33, 34, 35, 36 in den Nuten 37, 38, 39, 40 sowie eine gute Kraftübertragung sicherzustellen, sind die Stahlschienen 33, 34, 35, 36 an ihrer jeweiligen Rückseite dachartig ausgebildet. Die Nuten 37, 38, 39 40 sind dazu komplementär geformt.

Jede Stahlschiene 33, 34, 35, 36 weist als Führungsbahn eine längs verlaufende, kreisabschnittförmige Vertiefung auf, die durch eine Längsrille in zwei Laufflächen 42, 43 unterteilt ist, wie in Fig. 5 am Beispiel der Stahlschiene 33 veranschaulicht ist.

Der Längsschlitz 7 ist mittels eines Abdeckbandes 44 nach außen hin verschlossen, das im Bereich des Kraftübertragungselementes 8 von dem Längsschlitz 7 abgehoben und durch einen zwischen dem Kraftübertragungselement 8 und der außen liegenden Platte des Schlittens 4 definierten Längsdurchgang 46 geführt ist. Das Abdeckband 44 ist an seinen beiden Enden an der Führungsschiene 2 gehalten und außerhalb des Schlittens 4 mit der Führungsschiene 2 verrastet. Dazu weist die Führungsschiene 2 zu beiden Seiten des Längsschlitzes 7 sich nach oben erstreckende Rastrippen 47, 48 auf. Entsprechende längs verlaufende Stege 49 des Abdeckbandes 44 halten dieses an den Rastrippen 47, 48.

Zur Schmierung des Lagerelementes 11, der Kugeln 10 sowie der entsprechenden Stahlschienen 33, 34, 35, 36 sind an dem Schlitten 4 ein oder mehrere Schmiernippel 51 vorgesehen, die über entsprechende Kanäle 52 mit den Kugelrückführungskanälen 16, 17 der Lagerelemente 11a, 11b in Verbindung stehen.

Zum Antrieb des Schlittens 4 in Richtung der Achse 3 kann eine an dem Kraftübertragungselement 8 angreifende Antriebseinrichtung 53 vorgesehen sein. Diese ist bspw. ein an einem Ende der Führungsschiene 2 gehaltener Elektromotor, der eine sich längs durch die Führungsschiene 2 erstreckende Gewindespindel 54 antreibt. Das Kraftübertragungselement 8 weist eine Gewindebohrung 55 zur Aufnahme der Gewindespindel 54 auf. Diese ist in einer Spindellagerung 56 drehbar gelagert, die in einer endseitig an der Führungsschiene 2 befestigten Abschlußplatte vogesehen ist. Die Abschlußplatte fixiert außerdem die in den Nuten 37, 38, 39 40 liegenden Stahlschienen 33, 34, 35, 36.

Die Antriebseinrichtung 53, die Gewindespindel 54 und die Gewindebohrung 55 können auch weggelassen sein, wenn lediglich Lagerfunktionen erfüllt werden sollen.

Die insoweit beschriebene Linearführung 1 arbeitet wie folgt:

Die Platte des Schlittens 4 stützt sich mit dem Kraftübertragungselement 8 über die beiden Lagerlemente 11a, 11b und die Kugeln 10 an den Stahlschienen 33, 34, 35, 36 des Führungskörpers 2 ab. Der Schlitten 4 ist dadurch in allen in Bezug auf die Achse 3 radialen Richtungen sowie in Umfangsrichtung starr gelagert.

In Richtung der Achse 3 ist der Schlitten 4 jedoch beweglich. Wird dem Schlitten 4 eine Bewegung in Achsenrichtung, das heißt Längsrichtung, erteilt, laufen die Lagerelemente 11a, 11b mit ihren Laufbahnen 14, 15 auf den Kugeln 10, die sich auf den Laufflächen 42, 43 der Stahlschienen 33 bis 36 abstützen. Die in Fahrtrichtung nacheilenden und zwischen Lauffläche 14, 15 und Stahlschiene 33 bis 36 austretenden Kugeln 10 gelangen in die Umlenkkanäle 27', 28' des Umlenkelementes 25 und werden dadurch in die Kugelrückführungskanäle 16, 17 eingeführt. Nach Passieren der Kugelrückführungskanäle 16, 17 durchlaufen die Kugeln 10 die Umlenkkanäle 27, 28 des Umlenkelementes 24 und werden wieder zu den Laufbahnen 14, 15 der Lagerelemente 11 geführt, wie es durch Pfeile symbolisch in Fig. 2 angedeutet ist.

Die mit großem Umlenkradius überkreuz geführten Kugelreihen ermöglichen ein ruhiges Laufverhalten auch bei höheren Verfahrgeschwindigkeiten. Der Übergang der Kugeln 10 zwischen Schlitten 11 und Umlenkelementen 24, 25 wird durch eine möglichst präzise Ausrichtung der Umlenkelemente 24, 25 in Bezug auf den Schlitten 11 erreicht. Diese erfolgt durch an den Umlenkelementen 24, 25 angeformte Zapfen 29.

Die Montage der Führungsschiene ist mit der gewünschten Genauigkeit hinsichtlich der räumlichen Ausrichtung der Laufflächen 42, 43 erreicht, indem die Stahlschienen 33 bis 36 in die Nuten 37 bis 40 der Führungsschiene 2 in Längsrichtung eingeschoben werden. Sie sind darin formschlüssig gehalten. In Axialrichtung sind sie durch die Antriebseinrichtung 53 und die Spindellagerung 56 gehalten. Es bedarf keines zusätzlichen Arbeitsganges zur Befestigung der Stahlschienen 33 bis 36 in der Führungsschiene 2.

Eine Linearführung 1 mit vorzugsweise innen liegendem Schlitten 4 weist wenigstens zwei Wälzkörperumläufe 21, 22 zur Lagerung des Schlittens 4 an der Führungsschiene 2 auf. Die Kugelumläufe 21, 22 sind dabei so angelegt, daß sie sich im Bereich ihrer krummlinigen oder kurvenförmigen Umlenkbereiche überkreuzen. Dies ermöglicht es, möglichst große Umlenkradien zu erzielen und die Rückführungskanäle 16, 17 durch den Körper des Schlittens 4 zu führen. Neben einem kompakten Aufbau und einer vereinfachten Herstellung wird durch die großen erzielbaren Umlenkradien eine hohe Laufruhe auch bei höheren Verfahrgeschwindigkeiten erreicht. Die sich überkreuzenden Umlenkkanäle 27, 28 können in Kunststoffkörpern 24 vorgesehen sein, die stirnseitig auf den Schlitten 4 bzw. seine Lagerelemente 11 aufgesetzt sind. Der Führung des Schlittens 4 dienen Stahlschienen 33, 34, 35, 36, die im Innenraum 6 der vorzugsweise als Aluminium-Strangpreßprofil ausgebildeten Führungsschiene 2 angeordnet sind. Sie sind in Längsrichtung 3 jeweils in eine hinterschnittene Nut 37, 38, 39, 40 des Strangpreß-profiles eingeschoben und endseitig durch Lagerdeckel gesichert, die eine Spindel 54 zum Schlittenantrieb lagern.

## Patentansprüche

1. Linearführung (1)
mit einem als Führungsschiene (2) dienenden Führungskörper, an dem im Abstand parallel zueinander angeordnete Führungsbahnen (42, 43) vorgesehen sind,
mit wenigstens einem von außen her zugänglichen Schlitten (4), der in Bezug auf den Führungskörper in einer Richtung beweglich gelagert ist,
mit Führungslagern (9) zur Lagerung des Schlittens (4), die in einem Innenraum (6) des Führungskörpers angeordnet sind, der sich in Längsrichtung durch den Führungskörper erstreckt,
mit zu den Führungslagern (9) gehörigen Wälzkörpern (10), die der Abstützung des Schlittens (4) an den Führungsbahnen (42, 43) dienen und die von Führungsmitteln (24, 25) auf den Führungsbahnen jeweils in sich geschlossenen Umlaufwegen (21, 22) geführt sind,
die jeweils einen geradlinig ausgebildeten Tragabschnitt (14, 15), in dem die Wälzkörper (10) mit einem Abschnitt der jeweiligen Führungsbahn (42, 43) in Berührung stehen, und einen Rückführungsweg (16, 17) aufweisen, der sich mit gekrümmten Umlenkungsabschnitten an den Tragabschnitt (14, 15) anschließt,
dadurch gekennzeichnet,
daß die Umlaufwege (21, 22) durch das Führungsmittel (24, 25) einander räumlich überkreuzend festgelegt sind, wobei sich die Umlenkungsabschnitte (27, 28, 27', 28') zweier Umlaufwege (21, 22) jeweils paarweise überkreuzen, und
daß die geradlinig ausgebildeten Tragabschnitte (14, 15) und die geradlinigen Abschnitte der Rückführungswege (16, 17) der zwei einander zugeordneten Umlaufwege (21, 22) im wesentlichen in einer gemeinsamen Ebene liegen.

2. Linearführung nach Anspruch 1, dadurch gekennzeichnet, daß der Schlitten (4) einen außerhalb des Innenraumes (6) angeordneten Abschnitt aufweist, der über ein Kraftübertragungselement (8) mit in dem Innenraum (6) angeordneten Lagerelementen (11) verbunden ist, wobei das Kraftübertragungselement (8) einen an dem Führungskörper (2) ausgebildeten Längsschlitz (7) durchgreift.

3. Linearführung nach Anspruch 1, dadurch gekennzeichnet, daß zur Lagerung des Schlittens (4) wenigstens drei Führungslager (9) vorgesehen sind.

4. Linearführung nach Anspruch 1, dadurch gekennzeichnet, daß der Führungskörper (2) ein Aluminium-Strangpreßprofil ist.

5. Linearführung nach Anspruch 4, dadurch gekennzeichnet, daß die Führungsbahnen (42, 43) von Stahlschienen (33, 34, 35, 36) definiert sind, die in das Strangpreßprofil in Längsrichtung einschiebbar und formschlüssig darin gehalten sind.

6. Linearführung nach Anspruch 1, dadurch gekennzeichnet, daß der Schlitten (4) mit einer Antriebseinrichtung (53) verbunden ist, mittels derer der Schlitten (4) längspositionierbar ist.

7. Linearführung nach den Ansprüchen 2 und 6, dadurch gekennzeichnet, daß zum Antrieb des Schlittens (4) ein in dem Innenraum des Führungskörpers (2) angeordnetes Getriebemittel (54) vorgesehen ist und daß die Lagerelemente (11) in dem Innenraum (6) neben dem Getriebemittel (54) angeordnet sind.

8. Linearführung nach Anspruch 2, dadurch gekennzeichnet, daß jedem Lagerelement (11) jeweils zwei Führungslager (9) zugeordnet sind.

9. Linearführung nach Anspruch 8, dadurch gekennzeichnet, daß die Linearführung (1) wenigstens zwei mit dem Schlitten (4) verbundene Lagerelemente (11a, 11b) aufweist, die an vier in dem Innenraum (6) des Führungskörpers (2) angeordneten Führungsbahnen (33, 34, 35, 36) gelagert sind.

10. Linearführung nach Anspruch 1, dadurch gekennzeichnet, daß die Umlaufwege (21, 22) derart ausgebildet sind, daß die Wälzkörper (10) außerhalb linearer Umlaufwegabschnitte mit einem Umlenkradius geführt sind, der größer ist als ein Viertel des Abstandes der Tragabschnitte (14, 15) voneinander.

11. Linearführung nach Anspruch 1, dadurch gekennzeichnet, daß die einander überkreuzenden Umlenkungsabschnitte (27, 28, 27', 28') zweier Umlaufwege (21, 22) als Kanäle in einem als Umlenkeinrichtung dienenden Umlenkkörper (24, 25) ausgebildet sind.

12. Linearführung nach Anspruch 11, dadurch gekennzeichnet, daß der Umlenkkörper (24, 25) ein Kunststoffkörper ist.

13. Linearführung nach Anspruch 2, dadurch gekennzeichnet,
daß das Lagerelement (11) zwei an voneinander weg weisenden Seiten angeordnete Bahnabschnitte (14, 15), bei denen die das Lagerelement (11) jeweils lagernden Wälzkörper (10) befindlich sind, sowie zwei Rückführungskanäle (16, 17) aufweist,
daß jeder Rückführungskanal (16, 17) jeweils einem Bahnabschnitt (14, 15) zugeordnet ist und
daß das Lagerelement (11) stirnseitig mit Umlenkkörpern (24, 25) versehen ist, die einander überkreuzende Umlenkkanäle (27, 28) zur Verbindung des Bahnabschnittes (14, 15) mit dem jeweils zugeordneten Rückführungskanal (16, 17) enthalten.

14. Linearführung nach Anspruch 13, dadurch gekennzeichnet, daß der gerade Abschnitt des Rückführungskanals (16, 17) eines Umlaufweges (21, 22) jeweils dem tragenden Bahnabschnitt (15, 14) des anderen Umlaufweges (22, 21) benachbart ist.

15. Linearführung nach Anspruch 13, dadurch gekennzeichnet, daß die Umlenkkörper (24, 25) in Bezug auf ihre Lage zu dem Lagerelement (11) durch formschlüssig zwischen den Umlenkkörpern (24, 25) und dem Lagerelement (11) wirkende Mittel (29, 31) festgelegt sind.

16. Linearführung nach Anspruch 13, dadurch gekennzeichnet, daß die Umlenkkörper (24, 25) durch Rastmittel (29, 31) an dem Lagerelement (11) gehalten sind.

17. Linearführung nach Anspruch 2, dadurch gekennzeichnet, daß der Längsschlitz (7) mit einem Abdeckband (44) versehen ist, das durch Rastmittel (47, 48, 49) mit dem Führungskörper (2) verbindbar ist.

## Claims

1. Linear guide system (1)
having a guide body serving as a guide rail (2), on which guide tracks spaced parallel to one another (42, 43) are provided,
having at least one carriage (4) accessible from the outside which is disposed to permit movement in one direction with respect to the guide body,
having guide bearings (9) for support of the carriage which are arranged in an interior space (6) of the guide body, which extends in longitudinal direction through the guide body,
having rolling means (10) belonging to the guide bearings (9), said rolling means serving to support the carriage (4) on the guide tracks (42, 43) and being guided by the guides (24, 25) on the guide tracks in respectively closed circulating paths (21, 22),
which respectively have a linear support portion (14, 15), in which the rolling means (10) are in contact with a portion of the respective guide track (42, 43), and a return path (16, 17) adjoining the support portion (14, 15) by curved return portions,
characterised in that
the circulating paths (21, 22) through the guides (24, 25) are fixed to spatially cross one another, whereby the return portions (27, 28, 27', 28') of two circulating paths (21, 22) respectively cross one another in pairs, and
that the linear support portions (14, 15) and the linear portions of the return paths (16, 17) of the two circulating paths (21, 22) allocated to one another essentially lie in a joint plane.

2. Linear guide system according to Claim 1, characterised in that the carriage (4) has a portion arranged outside the interior space (6), which is connected via a force transfer element (8) to bearing elements (11) arranged in the interior space (6), whereby the force transfer element (8) engages through a longitudinal slit (7) formed on the guide body (2).

3. Linear guide system according to Claim 1, characterised in that at least three guide bearings (9) are provided for support of the carriage (4).

4. Linear guide system according to Claim 1, characterised in that the guide body (2) is an aluminium extruded profile.

5. Linear guide system according to Claim 4, characterised in that the guide tracks (42, 43) are defined by steel rails (33, 34, 35, 36), which may be inserted longitudinally into the extruded profile and are retained therein by interlocking fit.

6. Linear guide system according to Claim 1, characterised in that the carriage (4) is connected to a drive unit (53), by means of which the carriage (4) may be positioned longitudinally.

7. Linear guide system according to Claims 2 and 6, characterised in that a transmission element (54) arranged in the interior space of the guide body (2) is provided for driving the carriage (4), and that the bearing elements (11) are arranged next to the transmission element (54) in the interior space (6).

8. Linear guide system according to Claim 2, characterised in that two guide bearings (9) are respectively allocated to each bearing element (11).

9. Linear guide system according to Claim 8, characterised in that the linear guide system (1) has at least two bearing elements (11a, 11b) connected to the carriage (4), said bearing elements being disposed on four guide tracks (33, 34, 35, 36) arranged in the interior space (6) of the guide body (2).

10. Linear guide system according to Claim 1, characterised in that the circulating paths (21, 22) are constructed so that the rolling means (10) are guided outside linear circulating path portions with a return radius which is greater than a quarter of the distance between support portions (14, 15).

11. Linear guide system according to Claim 1, characterised in that the crossing return portions (27, 28, 27', 28') of two circulating paths (21, 22) are formed as ducts in a return guide element (24, 25) serving as return means.

12. Linear guide system according to Claim 11, characterised in that the return guide element (24, 25) is a plastic body.

13. Linear guide system according to Claim 2, characterised in
that the bearing element (11) has two track portions (14, 15) arranged on sides pointing away from one another, wherein the rolling means (10) respectively supporting the bearing element (11) are located, and also two return ducts (16, 17),
that each return duct (16, 17) is respectively allocated to one track portion (14, 15), and
that the bearing element (11) is provided on the face side with return guide elements (24, 25), which contain crossing return ducts (27, 28) for connecting the track portion (14, 15) to the respectively allocated return duct (16, 17).

14. Linear guide system according to Claim 13, characterised in that the straight portion of the return duct (16, 17) of one circulating path (21, 22) is respectively adjacent to the supporting track portion (15, 14) of the other circulating path (22, 21).

15. Linear guide system according to Claim 13, characterised in that the return guide elements (24, 25) are fixed with respect to their position relative to the bearing element (11) by means (29, 31) acting with interlocking fit between the return guide elements (24, 25) and the bearing element (11).

16. Linear guide system according to Claim 13, characterised in that the return guide elements (24, 25) are held on the bearing element (11) by locking means (29, 31).

17. Linear guide system according to Claim 2, characterised in that the longitudinal slit (7) is provided with a cover tape (44), which may be joined to the guide body (2) by locking elements (47, 48, 49).

## Revendications

1. Système de guidage linéaire (1) comprenant
un corps de guidage formant rail de guidage (2), sur lequel des chemins de roulement (42, 43) sont aménagés à distance les uns des autres, parallèlement les uns aux autres,
au moins un chariot (4) accessible de l'extérieur qui est monté mobile dans une direction par rapport au corps de guidage,
des paliers de guidage (9) pour supporter le chariot (4), disposés dans une chambre intérieure (6) du corps de guidage qui s'étend dans la direction longitudinale à travers le corps de guidage,
des éléments roulants (10) faisant partie des paliers de guidage (9), qui supportent le chariot (4) sur les chemins de roulement (42, 43 ) et sont amenés par des moyens de guidage (24, 25) sur les chemins de roulement suivant des trajectoires de circulation (21, 22) fermées, avec chaque fois une zone de charge (14, 15) rectiligne, dans laquelle les éléments roulants (10) sont en contact avec une zone du chemin de roulement (42, 43 ) concerné et une zone de retour (16, 17) qui se raccorde à la zone de charge (14, 15) par l'intermédiaire de deux zones courbes de changement de direction,
caractérisé par le fait
que les trajectoires de circulation (21, 22) à l'intérieur du moyen de guidage (24, 25) se croisent réciproquement dans l'espace, les zones de changement de direction (27, 28, 27', 28') de deux trajectoires de circulation (21, 22) se croisant deux à deux chaque fois,
que les zones de charge (14, 15) rectilignes et les tronçons rectilignes des zones de retour (16, 17) des deux trajectoires de circulation (21, 22) associées sont situés essentiellement dans un même plan.

2. Système de guidage linéaire selon la revendication 1, caractérisé par le fait que le chariot (4) comporte une partie disposée à l'extérieur de la chambre intérieure (6) qui est liée par l'intermédiaire d'un élément de transmission de forces (8) à des éléments de palier (11) disposés dans la chambre intérieure (6), l'élément de transmission de forces (8) passant par une fente longitudinale (7) aménagée dans le corps de guidage (2).

3. Système de guidage linéaire selon la revendication 1, caractérisé par le fait qu'il est prévu au moins trois paliers de guidage (9) pour supporter le chariot (4).

4. Système de guidage linéaire selon la revendication 1, caractérisé par le fait que le corps de guidage (2) est un profilé extrudé en aluminium.

5. Système de guidage linéaire selon la revendication 4, caractérisé par le fait que les chemins de roulement (42, 43) sont définis par des rails en acier (33, 34, 35, 36) qui sont insérés dans la direction longitudinale dans le profilé extrudé et sont tenus par complémentarité de formes dans celui-ci.

6. Système de guidage linéaire selon la revendication 1, caractérisé par le fait que le chariot (4) est lié à un dispositif d'entraînement (53) au moyen duquel le chariot (4) peut être positionné dans la direction longitudinale.

7. Système de guidage linéaire selon les revendications 2 et 6, caractérisé par le fait qu'il est prévu, pour l'entraînement du chariot (4), un mécanisme (54) qui est disposé dans la chambre intérieure du corps de guidage (2) et par le fait que les éléments de palier (11) sont disposés dans la chambre intérieure (6) à proximité du mécanisme (54).

8. Système de guidage linéaire selon la revendication 2, caractérisé par le fait que deux paliers de guidage (9) sont associés chaque fois à chaque élément de palier (11).

9. Système de guidage linéaire selon la revendication 8, caractérisé par le fait que le système de guidage linéaire (1) comprend au moins deux éléments de palier (11a, 11b) liés au chariot (4), qui reposent sur quatre chemins de roulement (33, 34, 35, 36) disposés dans la chambre intérieure (6) du corps de guidage (2).

10. Système de guidage linéaire selon la revendication 1, caractérisé par le fait que les trajectoires de circulation (21, 22) sont agencées de telle sorte que les éléments roulants (10), en dehors des zones de trajectoire rectilignes, sont guidés avec un rayon de changement de direction qui est supérieur au quart de la distance entre les zones de charge (14, 15).

11. Système de guidage linéaire selon la revendication 1, caractérisé par le fait que les zones de changement de direction (27, 28, 27', 28') qui se croisent mutuellement de deux trajectoires de circulation (21, 22) sont agencées sous forme de canaux dans un corps de changement de direction (24, 25) servant de dispositif de rebroussement .

12. Système de guidage linéaire selon la revendication 11, caractérisé par le fait que le corps de changement de direction (24, 25) est en matière plastique.

13. Système de guidage linéaire selon la revendication 2, caractérisé par le fait que l'élément de palier (11) comporte deux zones (14, 15) situées sur des côtés mutuellement opposés, dans lesquelles se trouvent les éléments roulants (10) qui supportent l'élément de palier (11),par le fait que chaque canal de retour (16, 17) est associé chaque fois à une zone (14, 15) et par le fait que l'élément de palier (11), à ses extrémités frontales, est pourvu de corps de changement de direction (24, 25) comportant des canaux de changement de direction (27, 28) qui se croisent pour relier la zone (14, 15) au canal de retour (16, 17) associé.

14. Système de guidage linéaire selon la revendication 13, caractérisé par le fait que la zone rectiligne du canal de retour (16, 17) d'une trajectoire de circulation (21, 22) est voisine chaque fois de la zone de charge (15, 14) de l'autre trajectoire de circulation (22, 21).

15. Système de guidage linéaire selon la revendication 13, caractérisé par le fait que les corps de changement de direction (24, 25), en ce qui concerne leur position par rapport à l'élément de palier (11), sont immobilisés par des moyens (29, 31) qui agissent par complémentarité de formes entre les corps de changement de direction (24, 25) et l'élément de palier (11).

16. Système de guidage linéaire selon la revendication 13, caractérisé par le fait que les corps de changement de direction (24, 25) sont tenus sur l'élément de palier (11) par des moyens d'encliquetage (29, 31).

17. Système de guidage linéaire selon la revendication 2, caractérisé par le fait que la fente longitudinale (7) est pourvue d'une bande de couverture (44) qui est liée au corps de guidage (2) par des moyens d'encliquetage (47, 48, 49).
